(19) Europäisches Patentamt
European Patent Office
Office européen des brevets

(11) Publication number: **0 033 588**
**A2**

(12) **EUROPEAN PATENT APPLICATION**

(21) Application number: **81300133.6**

(22) Date of filing: **13.01.81**

(51) Int. Cl.³: **B 23 B 3/26**
B 23 B 5/16, B 23 B 5/46

(30) Priority: **04.02.80 US 118336**

(43) Date of publication of application: **12.08.81 Bulletin 81/32**

(84) Designated Contracting States: **BE DE FR GB IT NL**

(71) Applicant: **PRECISION EQUIPMENT COMPANY, INC**
**909 Dairy Ashford Suite 205**
**Houston Texas 77079(US)**

(72) Inventor: **Paysinger, Joseph R.**
**1973 Western Village Lane**
**Houston Texas 77043(US)**

(74) Representative: **Rooney, Paul Blaise et al,**
**D. YOUNG & CO. 10 Staple Inn**
**London, WC1V 7RD(GB)**

(54) **Tool for spiral machining.**

(57) The tool (10) includes a base (9,9a) for carrying a hollow stationary tube (7) on which is rotatably mounted a circular platform (31). A clamp (12) can securely clamp tool (10) to a work member (25) requiring a machining operation. A socket (49) is movably mounted on a cutter box (40), which is coupled to the face (33) of the platform, for linear radial movement in a direction relative to the center of the platform. The radial movement is achieved by planetary action which is controlled by a clutch mechanism (76) mounted on tube 7. Thus, the linear movement of the socket is derived from the rotary motion of the platform. In a preferred embodiment, the cutter box can pivot about the axis of a drive shaft (41) which is rotatably coupled to a planetary shaft 71. The rotation of the drive shaft is selectively translated by a clutch (53) and a transmission (45) into the radial movement of the socket, which is adapted to accept relatively inexpensive, conventional cutters (50) that can cut across the face (26) of the work member a continuous, spiral pattern.

EP 0 033 588 A2

./...

FIG. 1.

TOOL FOR SPIRAL MACHINING

The tool of this invention is especially adapted for carrying out cutting operations in the field on work members having greatly varied configurations.

Tools for machining the ends of annular members, such as large pipes, flanges, and the like, are already known. Such machines are described, for example, in U.S.A. Patents Nos. 3,680,406, 3,733,939 and 3,875,832. The known machines are primarily adapted for use on annular members, pipes, valves, etc.; they require relatively large power for their operation; and they require especially formed cutters that are expensive to make and have a relatively short operational life. Such known tools are limited for use to a relatively small range of sizes of annular members. Thus, there is a need to haul into the field small and large tools for largely different size work members. Also, the known tools do not lend themselves for cutting continuous spiral grooves, such as are frequently required for gaskets between valve or pipe flanges.

It is an object to provide a tool capable of making continuous, spiral cutting operations on work members, which can be hollow or solid, and which can have a wide range of sizes and shapes.

It is another object to provide a tool for spiral machining which can utilize conventional and, therefore, readily available and relatively inexpensive cutters.

It is yet another object to provide such a spiral machining tool, which is relatively inexpensive to manufacture, relatively easy to operate by field personnel, and which can be powered with a relatively small size motor.

Ways of carrying out the invention are described with reference to the drawings which illustrate specific preferred embodiments and in which:

Figure 1 is a side elevational view of a preferred embodiment of the tool of this invention;

Figures 2, 3 and 4 are views taken along lines 2-2, 3-3, and 4-4 of Figure 1, respectively;

Figure 5 is a side view of the cutter box shown mounted on and parallel to the rotatable platform;

Figure 6 is similar to Figure 5 with the cutter box shown pivoted relative to the rotatable platform;

Figure 7 is a sectional, longitudinal view of the tool;

Figure 8 is a partial sectional view on line 8-8 of Figure 7;

Figure 9 is a front view, with certain parts broken-away and/or in section, of the cutter box;

Figure 10 is a sectional side view of the cutter box showing the transmission for driving the cutter;

Figure 11 is a sectional view taken on line 11-11 of Figure 9;

Figure 12 is a front view of the clutch plate, shown in its engaged position, which controls the transmission shown in Figure 10;

Figure 13 is a side view of the clutch plate shown in its disengaged position;

Figure 14 is a sectional detail view of the planetary drive mechanism which transfers the rotation of the platform to the transmission shown in Figure 10;

Figure 15 is a side view of the cutter box shown in position to start a spiral cut on a flange;

Figure 16 is a front view of the flange showing the spiral cut;

Figure 17 is a partial sectional view of the cut flange taken on line 17-17 of Figure 16;

Figure 18 is a view showing the progressive positions of the cutter as it travels radially inwardly toward the axis of the flange shown in Figure 16;

Figure 19 is a side view in elevation of the tool shown clamped to a pipe buried in a ditch; and

Figure 20 shows a bevel cut on the flange of the pipe shown in Figure 19.

According to the present invention there is provided a tool for cutting a work member. The tool includes a base for fixedly supporting a hollow stationary tube. A circular platform is rotatably mounted on the tube. A socket is mounted on the face of the platform. A cutter is carried by the socket. A rotatable planetary shaft extends through the platform. Planetary means are coupled between the planetary shaft and the stationary tube for rotating the planetary shaft with the rotation of the platform. Transmission means couple a drive shaft to the planetary shaft and with the socket for simultaneously and synchronously moving the cutter in a linear radial direction relative to the center of the platform.

Preferably, the socket is movable on a tool box mounted on the drive shaft for adjustable pivotable rotation relative to the platform.

To clamp the work member to the tool there is provided a rod which is coaxially mounted within the tube. A clamp is coupled to the rod. A sleeve is concentrically mounted between the rod and the tube. The sleeve is attached to the clamp and is movable in a longitudinal direction to bring the clamp and the work member mounted thereon toward or away from the platform.

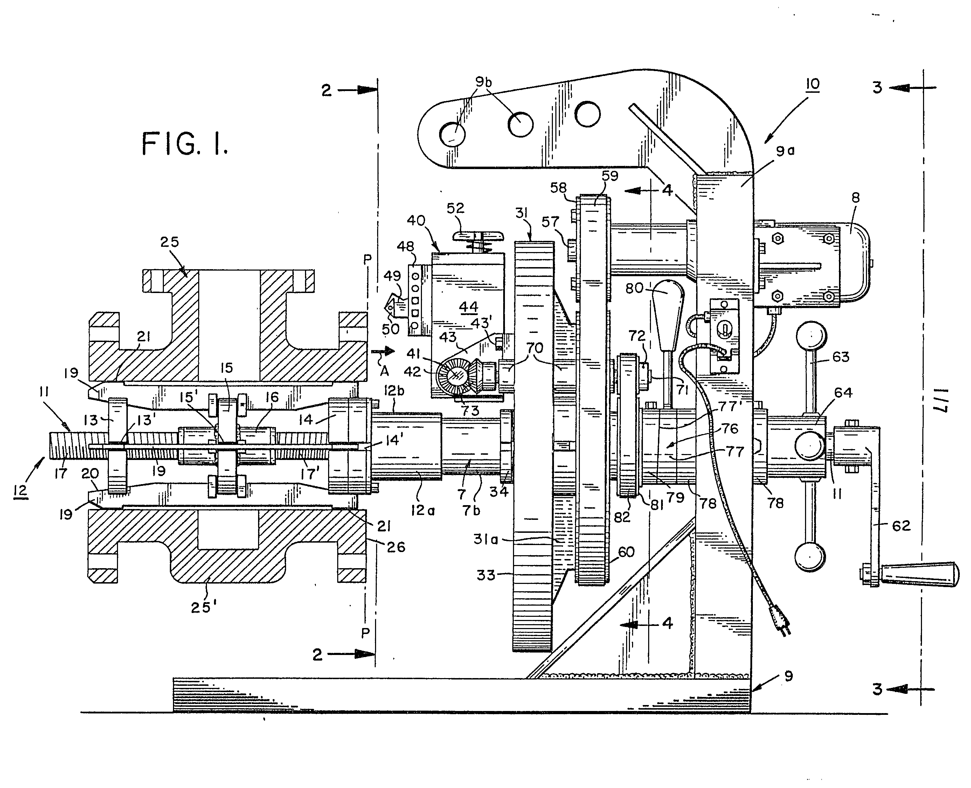

A general description of the tool 10 of this invention will be given with specific reference to Figures 1-3 and 7-8.

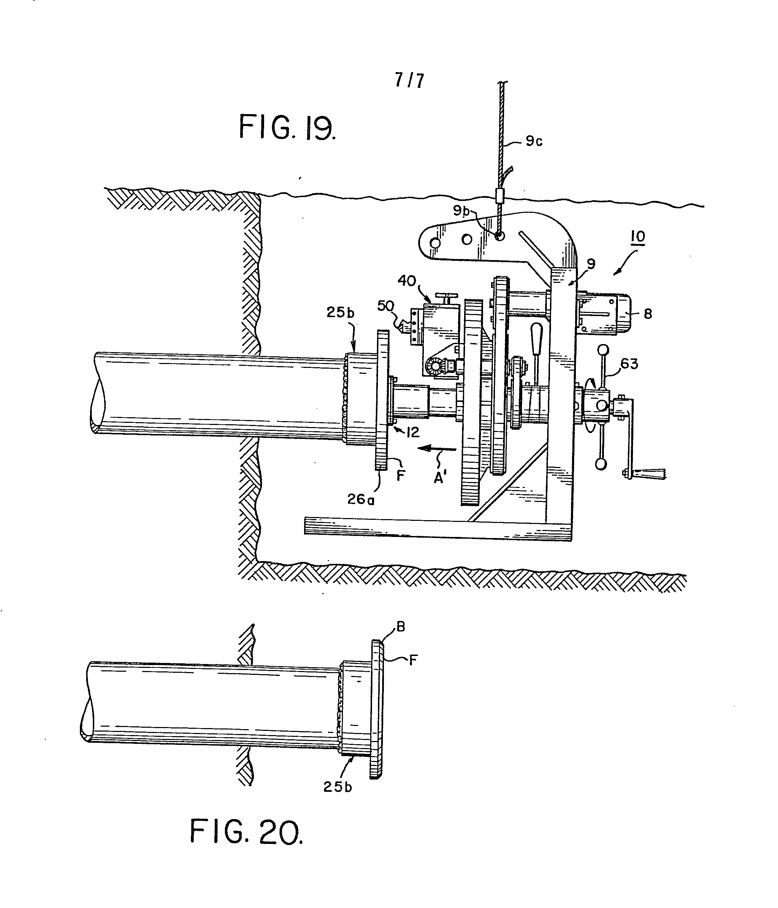

Tool 10 has a base 9 and an upright frame 9a defining holes 9b through which a rope 9c (Figure 19) can be attached. A motor 8 is mounted on frame 9a with its shaft 57 extending horizontally parallel to base 9. A cylindrical collar 78 mounts a main stationary support tube 7 on frame 9a. The axis of tube 7 extends in a horizontal direction.

A circular platform 31 is rotatably mounted about tube 7. Platform 31 has a front face 33. A pulley 60 is secured to the back of platform 31 by gussets 31a. Platform 31 is rotatably mounted about tube 7 on roller bearings 32 held in place by a retainer ring 34.

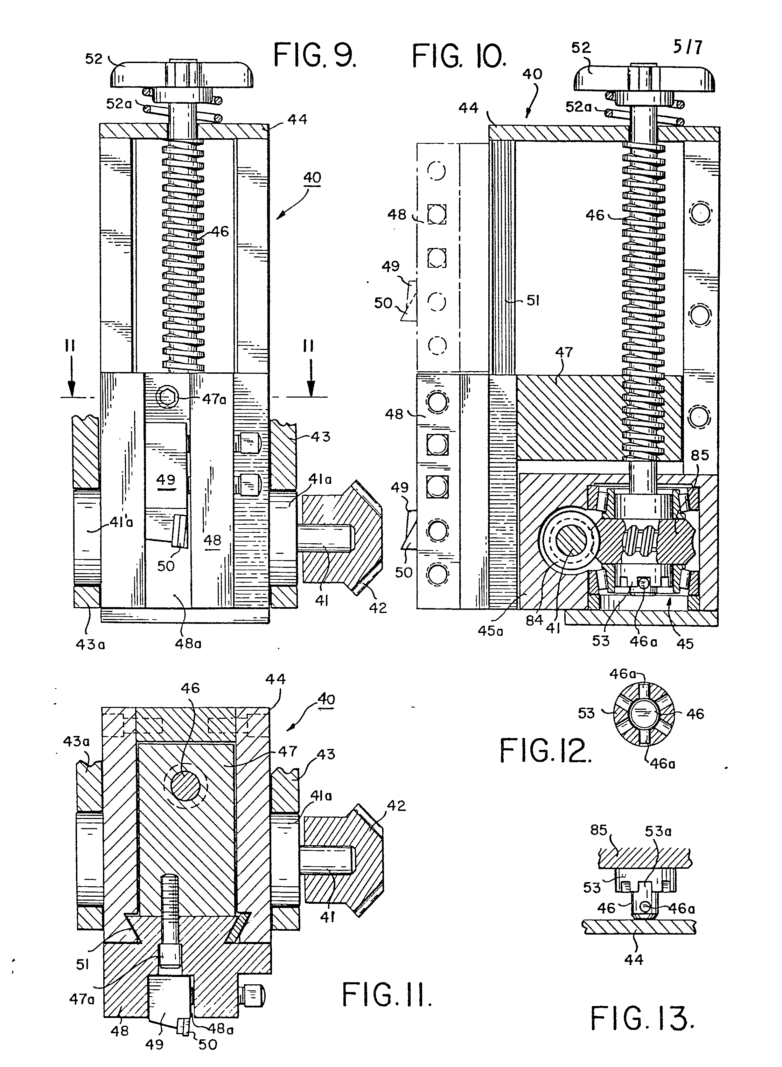

A cutter 50 is mounted in a socket 49 which rotates with platform 31. Rotating cutter 50 can be made to simultaneously linearly travel in a radial direction relative to the axis of face 33. The movement of socket 49 is controlled by a clutch 53 and a transmission 45 (Figures 9-13). Clutch 53 selectively engages a rotating drive shaft 41 with transmission 45. The axis of shaft 41 is parallel to face 33 (Figure 1) and is perpendicular to the axis of a planetary shaft 71 which carries a pulley 72. Shaft 71 is rotatably mounted in a bushing 70 secured to platform 31. Bushing 70 extends in a horizontal direction through platform 31. Socket 49 is preferably mounted on a cutter box, generally designated as 40. Box 40 can be adjusted within a certain range to any desired angular position relative to face 33.

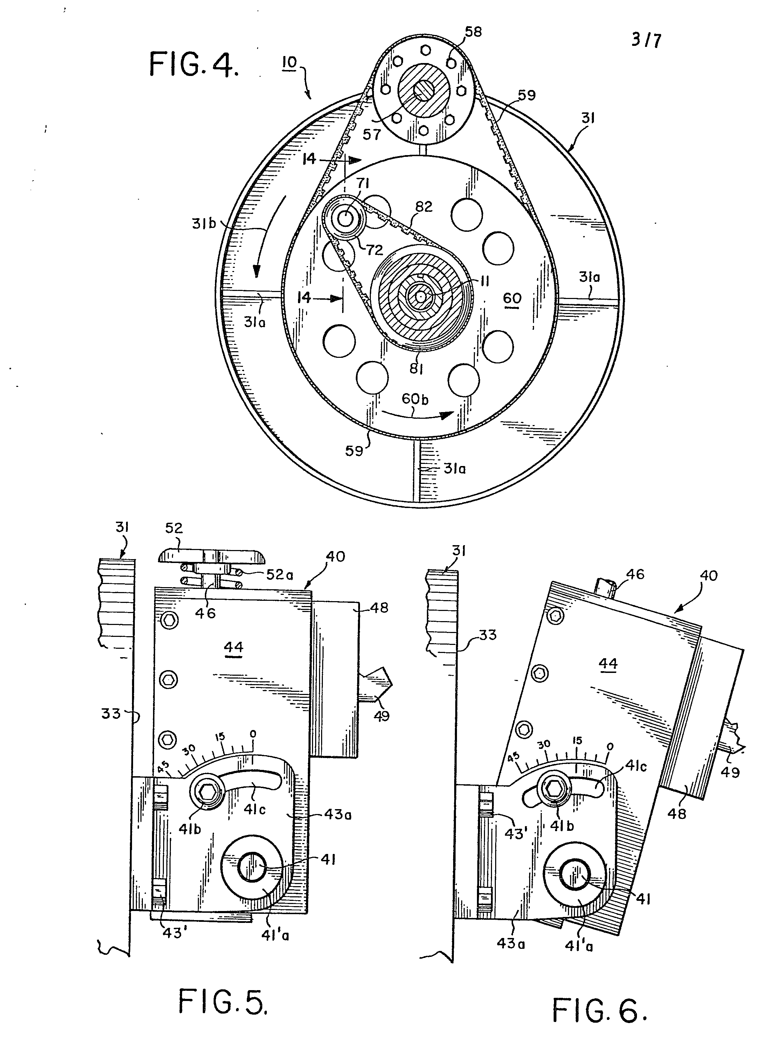

Tool 10 employs a single source of external power which is motor 8 whose shaft 57 (Figure 4) rotates pulley 60 and hence platform 31. The linear radial travel of socket 49 is derived indirectly by planetary action which selectively rotates shaft 71 through a clutch mechanism 76. Shafts 41 and 71 are geared through gears 42 and 73, respectively. The transmission 45 (Figure 10) converts the rotation of shaft 41 into linear travel of socket 49 and, hence, of cutter 50.

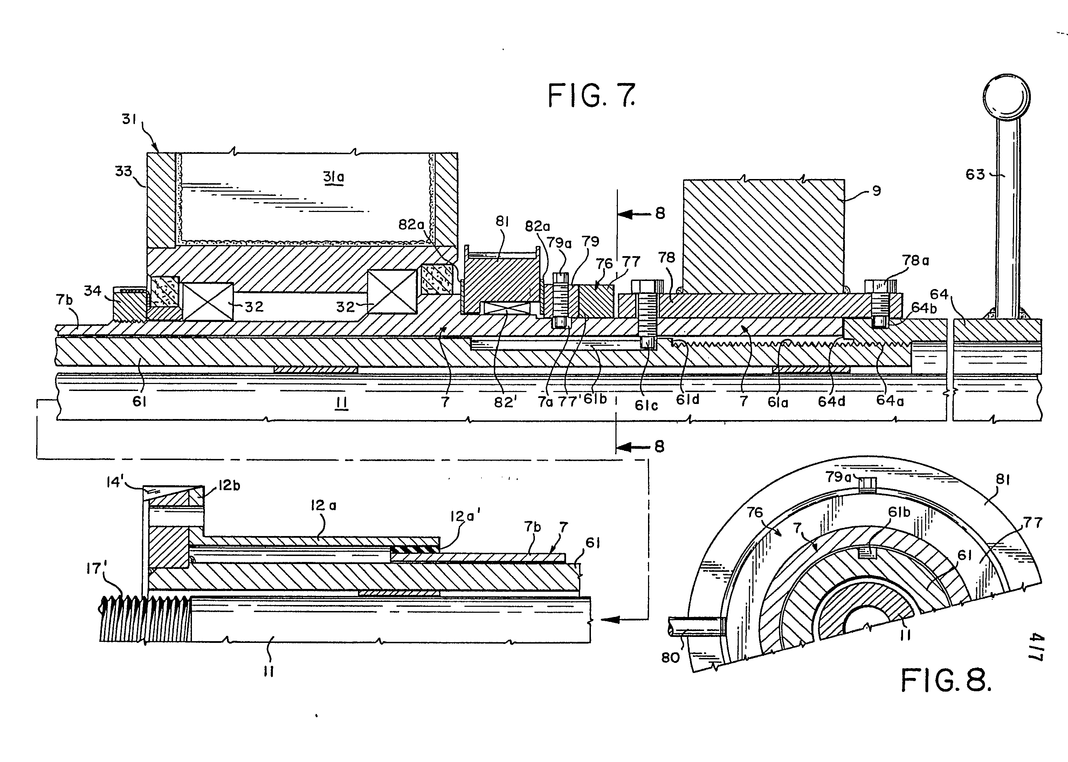

A rod 11 (Figure 7) is coaxially mounted within and extends throughout main tube 7. Rod 11 can be manually rotated to radially expand or contract a clamp 12. A sleeve 61 is concentrically mounted between rod 11 and the inner wall of tube 7. Clamp 12 is removably attached to sleeve 61 which can be made to move in an axial direction relative to stationary tube 7.

Clamp 12 is detachably secured to flange 12b of sleeve 61. Clamp 12 can be securely attached to a work member 25. Before working on member 25, socket 49 is manually moved until its cutter 50 is disposed at the desired position relative to work member 25. Cutter 50 is then made to rotate in a spiral path across the face 26 of work member 25.

Tool 10 will now be described in greater detail in connection with a spiralling cutting operation on a specific work member such as a valve 25' having a longitudinal bore therethrough. Valve 25' has a face 26 which it is desired to cut in a plane P-P that is parallel to face 33.

Clamp 12 is coupled to rod 11. One end of rod 11 carries a crank 62. The opposite end of rod 11 has oppositely-threaded, spaced portions 17, 17'. Discs 13, 14 are threadedly mounted on portions 17, 17', respectively. A bushing 16 is disposed between discs 13 and 14. A disc 15 is mounted on bushing 16. Discs 13, 14 and 15 have longitudinal slots 13', 14', 15', respectively. A blade 19 is disposed within each set of aligned slots 13', 14', 15'. Blade 19 has tapered inner walls 20 and a pair of outer gripping jaws 21. A shield sleeve 12a (Figure 7) is slidably mounted on a seal 12a' which is supported by the outer end 7b of tube 7. Sleeve 12a protects the bore of tube 7 from collecting metal cuttings. Disc 14 is detachably secured to sleeve 61 and to flange 12b.

Sleeve 61 is disposed inside tube 7 for axial movement but not rotation relative to rod 11. The inner end of sleeve 61 has an external thread 61a and a shoulder 61d.

A control sleeve 64 has an internal thread 64a which engages thread 61a. Control sleeve 64 has an annular groove 64b in which rides a pin 78a which extends through collar 78. Pin 78a prevents the axial movement of sleeve 64 when it is rotated by handle bars 63.

The maximum axial displacement of sleeve 61 to the left (as viewed in Figure 7) is limited by a pin 61c riding in a longitudinal slot 61b. When sleeve 61 reaches its maximum displacement, pin 61c abuts against shoulder 61d. The axial displacement of sleeve 61 to the right is limited by wall 64d of sleeve 64. Thus, the rotation of sleeve 64 will cause sleeve 61 to move longitudinally relative to platform 31.

Box 40 (Figures 9-13) has a frame 44 which is provided with a pair of hubs 41a, 41'a that are rotatably supported on brackets 43, 43a, respectively. Bolts 43' (Figure 1) secure brackets 43, 43a to platform 31. Shaft 41 extends through and is rotatably mounted in hubs 41a and 41'a. Bracket 43a (Figures 5, 6) has an arcuate slot 41c in which rides an adjusting bolt 41b that can securely fasten box 40 to bracket 43a.

The transmission 45 (Figure 10) translates the rotation of shaft 41 into linear travel by socket 49. Bevel gear 73 (Figure 1) on shaft 71 rotates bevel gear 42 on shaft 41. Inside frame 44 is a block 45a in which is mounted a worm gear 84 carried by shaft 41. Gear 84 meshes with a rotatably mounted pinion gear 85. To the lower end of gear 85 is mounted the annular clutch plate 53 having radial recesses 53a therein.

Slidably extending through gear 85 is the unthreaded bottom portion of a lead screw 46. A transverse pin 46a is carried by screw 46. Pin 46a can selectively engage the recesses 53a in clutch plate 53. The portion of lead screw 46 which extends through the top of frame 44 carries a coil spring 52a and a wheel 52. By compressing spring 52a with wheel 52, the lower end of lead screw 46 will move downwardly; pin 46a will disengage from clutch plate 53; and lead screw 46 will disengage from pinion gear 85. When clutch 53 is disengaged, socket 49 and cutter 50 stop traveling on lead screw 46.

When pin 46a is disengaged from clutch 53 by the exertion of a downward force on wheel 52, lead screw 46 can be hand rotated to allow socket 49 to bring tool 50 to its desired start position opposite to work member 25. If desired, box 40 is first pivoted on brackets 43, 43a relative to platform 31.

A nut 47 is threadedly coupled to lead screw 46. A slide block 48 (Figure 11) is secured to nut 47 by screws 47a. A dovetail slide 51 is formed within the end portions of a pair of opposite sidewalls of frame 44. Block 48 slides in the dovetail 51 and has on its front face a recess 48a for detachably receiving socket 49. Socket 49 is adapted to carry conventional cutters 50 which are selected dependent upon the desired cutting operation to be performed on work member 25.

Although motor 8 (Figures 1, 4) is shown as being electrically operated, it can be fluid operated. Shaft 57 of motor 8 carries a pulley 58 whose rotation is transmitted by a belt 59 to pulley 60 which rotates platform 31. A pulley 81 is mounted for rotation about tube 7. Pulleys 72 and 81 are coupled by a belt 82. Pulley 81 is mounted on a sleeve bearing 82' (Figure 7) between a pair of spaced bearing plates 82a. Pulley 81 can be locked to tube 7 through the clutch mechanism 76. Clutch 76 includes a rotatable wedge ring 77 and an adjacent wedge ring 79. Rings 77, 79 are mounted on tube 7 and have opposite wedge faces 77'. A pin 79a prevents ring 79 from rotating relative to tube 7. Pin 79a projects into a recess 7a which limits the axial displacement of ring 79.

Ring 77 is sandwiched between ring 79 and the end wall of collar 78. Ring 77 can be rotated with a handle 80. The rotation of ring 77 exerts an axial force to the left (as viewed in Figure 7) against the sloping face 77' of ring 79, thereby locking pulley 81 to stationary tube 7. Thus, when clutch mechanism 76 is engaged, pulley 81 is locked to stationary tube 7.

To start the cutting operation, tool 10 is clamped to work member 25 with the aid of clamp 12.

Rotation of crank 62 will rotate rod 11 and move threaded discs 13 and 14 towards each other, thereby expanding clamp 12 and causing jaws 21 to firmly grip work member 25. Sleeve 64 is then rotated to cause sleeve 61 to move axially to the right (as viewed in Figure 1), thereby moving work member 25 toward face 33 in the direction of arrow A (Figure 1).

Box 40 is pivotably adjusted to the desired angular inclination relative to face 33. For most cutting operations, box 40 will be parallel with face 33. However, to make a bevel cut (Figure 19), box 40 will be inclined relative to face 33.

Wheel 52 (Figure 10) is then depressed to disengage clutch 53 from lead screw 46 and from pinion gear 85. While wheel 52 is pressed downwardly, it is also rotated to cause cutter 50 to travel to its start position on face 26 of work member 25. After these preliminary adjustments, tool 10 is ready to become energized by motor 8.

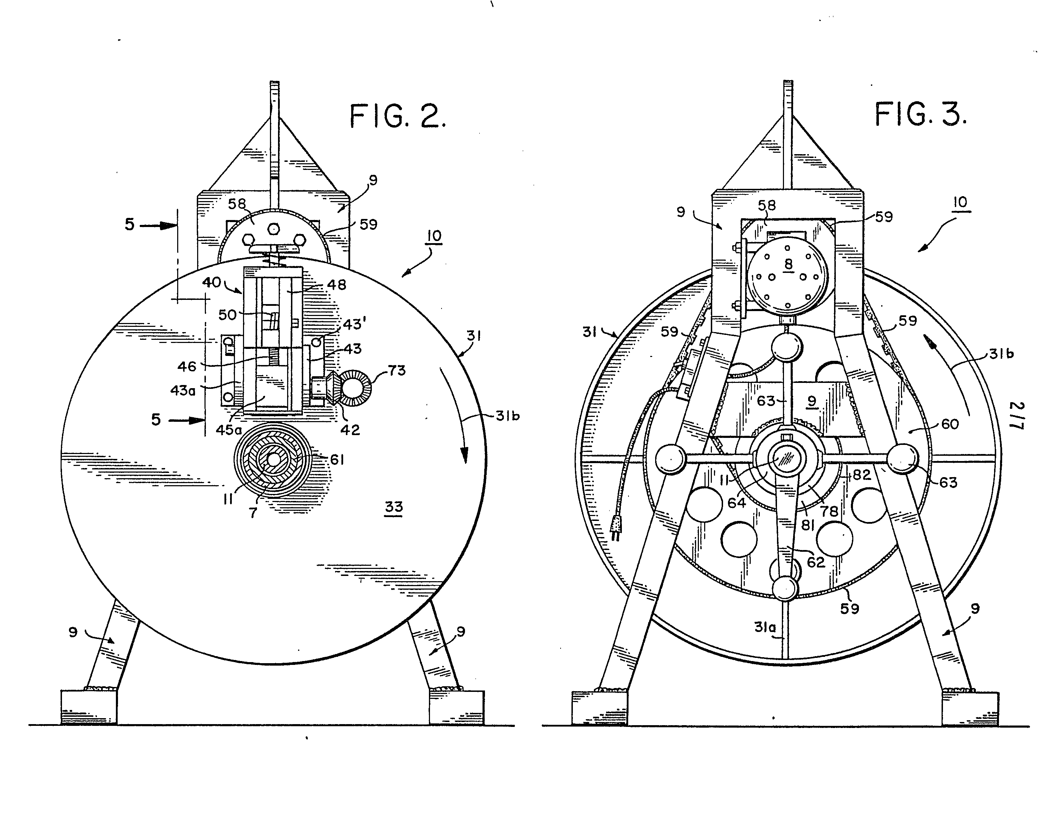

The rotation of shaft 57 of motor 8 is transmitted by belt 59 on pulleys 58 and 60 to platform 31. When pulley 60 rotates counterclockwise in the direction of arrow 60b (Figure 4), platform 31 will also rotate counterclockwise (Figure 3) in the direction of arrow 31b.

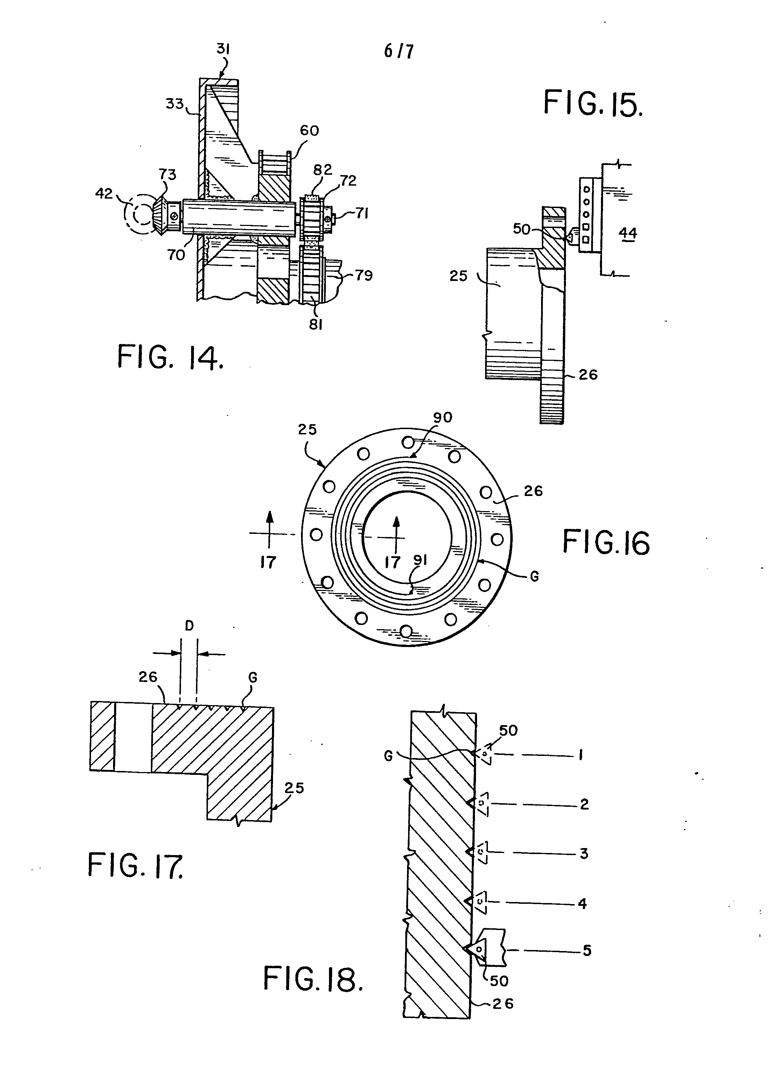

When clutch mechanism 76 is disengaged (Figures 7-8), pulley 81 will rotate about stationary tube 7 (Figure 4), and pulley 72 will not rotate shaft 71. When clutch 76 is engaged (Figures 1 and 14) pulley 81 is locked to stationary tube 7 and, therefore, belt 82 starts rotating pulley 72 which rotates shaft 71 in a planetary mode of operation.

In Figures 15-16 cutter 50 starts at point 90, and in Figure 18 the starting position of cutter 50 is indicated by the broken line 1. Cutter 50 will cut a spiral groove G across face 26 of work member 25. Groove G starts at point 90 and ends at point 91. Broken lines 2, 3, 4 and 5 indicate the starting points of each successive revolution on spiral groove G. Each such revolution is spaced from its adjacent revolution by a radial distance D (Figure 17).

Tool 10 lends itself for use in the field as illustrated in connection with a pipe 25b which is buried in a trench (Figures 19-20). Machine 10 can be lowered into the trench on a winch cable 9c for movement in an axial direction A' so that its clamp 12 fits inside the bore of the buried pipe. Cutter 50 is adapted to cut a bevel B on the pipe's flange 26a which has a face F. Other cutting operations possible with portable tool 10 will become readily apparent to those skilled in the machining art.

In summary of the spiral cutting operation, platform 31 rotates cutter 50 around work member 25, while socket 49 causes the cutter to travel towards the center of platform 31 when both clutches 33 and 76 are engaged.

CLAIMS:

1. A tool (10) for cutting a work member (25), including a base (9, 9a) for fixedly supporting a hollow stationary tube (7), a circular platform (31) rotatably mounted on said tube, a socket (49) mounted on the face (33) of said platform, and a cutter (50) carried by said socket, characterized in that a rotable planetary shaft (71) extends through said platform, planetary means (72, 81 and 82) are coupled between said planetary shaft and said stationary tube for rotating said planetary shaft with the rotation of said platform, transmission means (45) coupling a drive shaft (41) with said planetary shaft and with said socket for simultaneously and synchronously moving said cutter in a linear radial direction relative to the center of said platform.

2. The tool according to Claim 1, characterized in that said socket is movable on a tool box (40) mounted on said drive shaft for adjustable pivotable rotation relative to said platform.

3. The tool according to Claims 1 and 2, characterized in that a rod (11) is coaxially mounted within said tube, a clamp (12) is coupled to said rod, and a sleeve (61) is concentrically mounted between said rod and said tube, said sleeve being attached to said clamp and being movable in a longitudinal direction to bring the clamp toward or away from said platform.

4. The tool according to any one of the preceding claims, characterized in that said transmission means include a first clutch (53) for selectively controlling the linear movement of said cutter; and a second clutch (76) on said tube for selectively rotating said planetary shaft with the rotation of said platform.

1/7

FIG. 1.

FIG. 2.
9
58
59
5
10
40
48
50
43'
43
31
46
73
43a
31b
5
45a
42
61
11
7
33
9
9
FIG. 3.
58
9
59
10
8
59
31
59
31b
63
9
60
82
11
63
64
78
81
62
59
31a
9

FIG. 4.
10
58
57
59
31
14
71
82
31b
72
11
31a
60
14
31a
81
60b
59
31a
31
52
40
52a
46
48
44
49
33
45
30
15
0
41c
43a
41b
41
43'
41'a
FIG. 5.
31
46
40
33
44
45
30
15
0
41c
49
43'
41b
48
41
43a
41'a
FIG. 6.

FIG. 7.
31
33
31a
9
63
82a
81
82a
79a
79
76
77
78
78a
64
64b
7b
34
32
32
8
61
11
7
82'
7a
77'
61b
61c
61d
7
61a
64d
64a
8
14'
12b
12a
12a'
7b
7
61
17'
11
79a
81
76
7
61b
77
61
11
80
FIG. 8.

52
52a
44
40
46
11
11
47a
43
49
41a
41a
48
50
41
42
43a
48a
52
52a
44
40
48
46
49
50
51
47
48
85
49
50
45a
84
41
53
46a
45
46
44
40
43a
47
43
41a
42
41
51
47a
48
49
50
48a
46a
53
46
46a
85
53a
53
46
46a
44

FIG. 9.

FIG. 10.

FIG. 11.

FIG. 12.

FIG. 13.

31
33
60
73
82
72
42
71
70
79
81
50
44
25
26
90
25
26
17
17
91
G
D
26
G
25
50
G
1
2
3
4
5
50
26

FIG. 14.

FIG. 15.

FIG. 16

FIG. 17.

FIG. 18.

FIG. 19.
9c
9b
10
9
40
50
8
25b
63
12
A'
F
26a
B
F
25b
FIG. 20.